# EUROPÄISCHE PATENTANMELDUNG

(11) **EP 1 202 523 A2**
(43) Veröffentlichungstag der Anmeldung: **02.05.2002**
(21) Anmeldenummer: 01119366.1
(22) Anmeldetag: 10.08.2001
(51) Int. Cl.: H04L 29/06, G06F 17/30

(54) **Vorrichtung und Verfahren zum Synchronisieren von Datenbanken in verteilten Kommunikationssystemen**

(30) Priorität: 19.09.2000 DE 10046319
(71) Anmelder: SIEMENS AKTIENGESELLSCHAFT, 80333 München (DE)
(72) Erfinder: Neuhaus, Ralf, 44534 Lünen (DE); Uecker, Rainer, 45472 Mülheim (DE)

(57) **Zusammenfassung**

Die vorliegende Erfindung betrifft einen Server (1) für ein - vorzugsweise privates - Kommunikationssystem mit mehreren, untereinander über ein Netzwerk verbundenen Kommunikationsanlagen (2,3). Der Server umfaßt eine zentrale Datenbank (11) zum zentralen Speichern von Daten der einzelnen Kommunikationsanlagen (2,3) und eine zentrale Synchronisationseinrichtung (12), welche die Daten zwischen der zentralen Datenbank (11) und den einzelnen Kommunikationsanlagen (2,3) synchronisiert. Weiterhin betrifft die vorliegende Erfindung eine Kommunikationsanlage (2,3) für das Kommunikationssystem und ein Verfahren zum Synchronisieren von Datenbanken.

## Beschreibung

Die vorliegende Erfindung betrifft einen Server für ein aus einer oder mehreren untereinander verbundenen Kommunikationsanlagen bestehenden Kommunikationssystem, eine Kommunikationsanlage für dieses Kommunikationssystem und ein Verfahren zum Synchronisieren von in den Kommunikationsanlagen und/oder dem Server angeordneten Datenbanken.

Moderne Kommunikationssysteme bestehen häufig aus mehreren räumlich verteilten, untereinander vernetzten Kommunikationsanlagen. Jede dieser Kommunikationsanlagen verfügt dabei über eine eigene Vermittlungsintelligenz und eine eigene lokale Datenbank zur Speicherung von kommunikationsanlagen-spezifischen Daten. Die lokalen kommunikationsanlagen-spezifischen Datenbanken dienen dabei einer Speicherung von für einen eigenständigen Betrieb - in der Literatur häufig als 'Standalone-Betrieb' bezeichnet - einer Kommunikationsanlage notwendigen Daten, beispielsweise von Teilnehmernummern, Berechtigungen, Amtsleitungen, Durchwahlnummern, Rufnummern, Konfigurationsdaten, Kurzwahlzielen, usw. Um aus diesen Kommunikationsanlagen einen Netzverbund von vernetzten Kommunikationsanlagen zu realisieren, müssen die einzelnen Kommunikationsanlagen jeweils für sich entsprechend konfiguriert werden, d.h. mit den in den anderen Kommunikationsanlagen gespeicherten Daten abgeglichen werden.

Bei einer derartigen Konfigurierung ist insbesondere die Vergabe eines konsistenten und eindeutigen Rufnummernplans für das gesamte Kommunikationssystem zwischen den einzelnen Kommunikationsanlagen notwendig. Auch andere für einen solchen Netzverbund übergreifend gültige Daten sind jeweils entsprechend zu konfigurieren und in den einzelnen Kommunikationsanlagen zu synchronisieren.

Ein Nachteil dieser Lösung besteht darin, daß eine Pflege und Wartung der lokalen Datenbanken aufgrund der Menge der zu administrierenden Daten sehr aufwendig und fehlerträchtig ist. So müssen beispielsweise bei einer Änderung des Rufnummernplans in einer der Kommunikationsanlagen diese Änderungen auch in den anderen Kommunikationsanlagen des Kommunikationssystems angepaßt werden. Zusätzlich kann es bei einer manuellen Administration der Kommunikationsanlagen dazu kommen, daß eine Rufnummer innerhalb des Kommunikationssystems mehrfach vergeben wird.

Der vorliegenden Erfindung liegt daher die Aufgabe zugrunde, Maßnahmen bereitzustellen, durch die eine einfache Administration und Synchronisation von Datenbanken innerhalb eines Kommunikationssystems ermöglicht wird.

Diese Aufgabe wird durch einen Server gemäß dem beigefügten Patentanspruch 1, eine Kommunikationsanlage gemäß dem beigefügten Patentanspruch 8 und ein Verfahren zum Synchronisieren von Datenbanken gemäß dem beigefügten Patentanspruch 11 gelöst.

Gemäß der vorliegenden Erfindung befindet sich auf einem zentralen Server eine zentrale, übergreifende Server-Datenbank, in der mindestens ein Teil von in lokalen Client-Datenbanken der jeweiligen Kommunikationsanlagen gespeicherten Daten abgespeichert werden. Somit besteht in der zentralen Datenbank ein Abbild von mindestens einem Teil der Daten der jeweiligen lokalen Datenbanken. Diese - im folgenden als erste Daten bezeichneten - kommunikationsanlagen-spezifischen Daten beinhalten beispielsweise für einen Betrieb der jeweiligen Kommunikationsanlage notwendige Informationen.

Ein Vorteil der vorliegenden Erfindung besteht darin, daß sich ein - vorzugsweise privates - Kommunikationssystem mit den untereinander vernetzten Kommunikationsanlagen nach außen hin wie ein einziges Kommunikationssystem darstellt. Dadurch wird eine zentrale Verwaltung und Administration der lokalen Datenbanken der einzelnen Kommunikationsanlagen auf einfache Weise ermöglicht.

Vorteilhafte Ausgestaltungen der vorliegenden Erfindung sind in den jeweiligen Unteransprüchen wiedergegeben.

Vorteilhafterweise ist auf dem Server eine Administrierungseinrichtung installiert, die eine zentrale Verwaltung und Administration der zentralen und lokalen Datenbanken ermöglicht. Dabei werden in der zentralen Datenbank geänderte erste Daten an die entsprechende Kommunikationsanlage übermittelt in der die ersten Daten der lokalen Datenbank aktualisiert werden.

Bei den in der zentralen Datenbank geänderten ersten Daten kann es sich um Daten handeln, die mehrere Kommunikationsanlagen innerhalb des Kommunikationssystems betreffen. Deshalb enthält der erfindungsgemäße Server eine zentrale Prüfeinrichtung, die überprüft, ob es sich bei geänderten ersten Daten um Daten handelt, die mehrere Kommunikationsanlagen betreffen, und die bei einem positiven Prüfungsergebnis diese Daten für die entsprechenden Kommunikationsanlagen in der zentralen Datenbank aktualisiert. Die geänderten Daten werden anschließend durch eine zentrale Synchronisationseinrichtung mit den jeweiligen lokalen Datenbanken synchronisiert, d.h. an die jeweiligen Kommunikationsanlagen versendet, in denen die Daten in den lokalen Datenbanken aktualisiert werden.

Erste Daten, deren Änderung in einer lokalen Datenbank einer Kommunikationsanlage eine Änderung in weiteren lokalen Datenbanken weiterer Kommunikationsanlagen nach sich ziehen, sind beispielsweise Änderungen in Rufnummernplänen. Ein Rufnummernplan enthält Informationen darüber, welche Rufnummern des Kommunikationssystems welcher Kommunikationsanlage zugeordnet sind. Bei einer Änderung im Rufnummernplan einer Kommunikationsanlage muß der neue Rufnummernplan in allen weiteren Kommunikationsanlagen innerhalb des Kommunikationssystems entsprechend angepaßt werden, da ansonsten bei einer Vergabe von gleichen Rufnummern innerhalb des Kommunikationssystems ein eindeutiger Verbindungsaufbau, d.h. eine eindeutige Zuweisung einer Rufnummer zu einer Kommunikationseinrichtung nicht mehr möglich ist.

Der erfindungsgemäße Server bzw. die erfindungsgemäße Kommunikationsanlage verfügen jeweils über eine zentrale bzw. lokale Aktualisierungseinrichtung zum Empfangen der geänderten ersten Daten, die von der jeweils anderen Vorrichtung über das Netzwerk versendet wurden. Die zentrale bzw. die lokale Aktualisierungseinrichtung aktualisieren dabei die empfangenen Daten in der jeweiligen zentralen bzw. lokalen Datenbank.

Optional kann die zentrale Datenbank des Servers zweite Daten zur Verfügung stellen, die nicht in den jeweiligen Kommunikationsanlagen gespeichert und nicht unmittelbar zum Betrieb einer Kommunikationsanlagen notwendig sind. Die erfindungsgemäße Kommunikationsanlage hat mittels einer lokalen Zugriffseinrichtung Zugriff auf diese zweiten Daten. Die zweiten Daten können ebenfalls mittels der zentralen Administrierungseinrichtung im Server zentral administriert und verwaltet werden.

Die vorliegende Erfindung wird nachfolgend anhand bevorzugter Ausführungsbeispiele unter Bezug auf die beigefügten Zeichnungen näher erläutert.

Dabei zeigen:
- Fig. 1:: eine schematische Darstellung eines erfindungsgemäßen Servers und erfindungsgemäßer Kommunikationsanlagen; und
- Fig. 2:: ein Beispiel für ein privates Kommunikationssystem mit mehreren, untereinander vernetzten Kommunikationsanlagen.

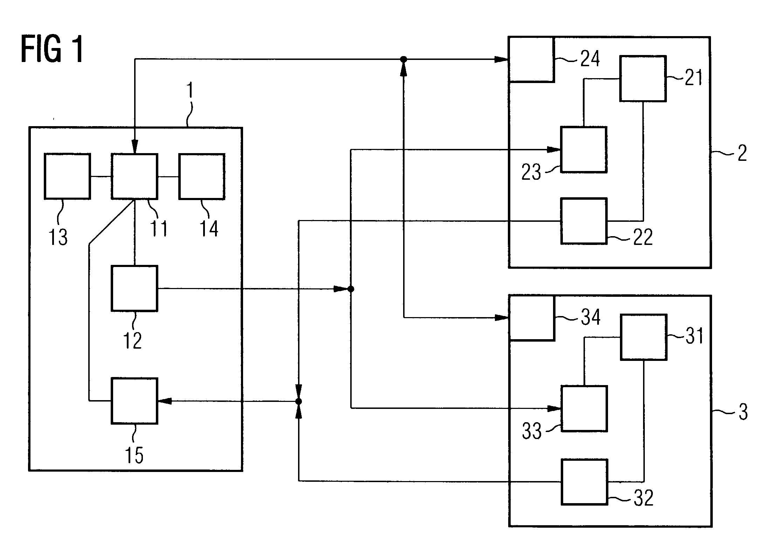

Fig. 1 zeigt eine schematische Darstellung eines erfindungsgemäßen Servers 1 in einem - vorzugsweise privaten - Kommunikationssystem bzw. Kommunikationsnetz. Der Server 1 ist über ein Netzwerk mit einer oder mehreren erfindungsgemäßen Kommunikationsanlagen 2,3 verbunden. Die Kommunikationsanlagen 2,3 weisen jeweils eine lokale Datenbank 21,31 zur Speicherung von kommunikationsanlagen-spezifischen Daten - im folgenden als erste Daten bezeichnet - auf. Die Verbindungslinien mit Pfeilen zeigen dabei die Richtung an, in der Meldungen bzw. Daten zwischen den Kommunikationsanlagen 2,3 untereinander bzw. zwischen dem Server 1 und den Kommunikationsanlagen 2,3 ausgetauscht werden. Das Netzwerk ist im vorliegenden Ausführungsbeispiel ein IP-orientiertes (Internet Protocol) Netzwerk, bei dem eine Datenübertragung über ein auf dem IP-Protokoll basierenden Übertragungsprotokoll erfolgt.

Die zentrale Einheit des erfindungsgemäßen Servers 1 wird durch eine zentrale Datenbank 11 gebildet, in der ein Abbild (Kopie) der einzelnen lokalen Datenbanken 21,31 der jeweiligen Kommunikationsanlagen 2,3 oder Teile dieser lokalen Datenbanken 21,31 gespeichert sind.

Eine zentrale Synchronisationseinrichtung 12 des Servers 1 überwacht die zentrale Datenbank 11 auf eine Änderung von in der zentralen Datenbank 11 gespeicherten ersten, beispielsweise für den Betrieb einer Kommunikationsanlage 2,3 notwendigen Daten. Wurden in der zentralen Datenbank 11 erste, eine oder mehrere Kommunikationsanlagen 2,3 betreffende Daten geändert, so werden die geänderten ersten Daten durch die zentrale Synchronisationseinrichtung 12 über das Netzwerk an die entsprechende bzw. die entsprechenden Kommunikationsanlagen 2,3 übermittelt. Die erfindungsgemäßen Kommunikationsanlagen 2,3 empfangen die geänderten Daten über eine in der jeweiligen Kommunikationsanlage 2,3 angeordnete lokale Aktualisierungseinrichtung 23,33, über die eine Aktualisierung der in der jeweiligen lokalen Datenbank 21,31 gespeicherten ersten Daten erfolgt.

Die ersten Daten können mit Hilfe einer zentralen Administrierungseinrichtung 13 zentral administriert und verwaltet werden. Eine zentrale Prüfeinrichtung 14 des Servers 1 überprüft, ob geänderte, eine Kommunikationsanlage 2,3 betreffende erste Daten (z.B. bei einer Änderung eines Rufnummernplans) eine Änderung von ersten Daten in anderen Kommunikationsanlagen 2,3 zur Folge haben und aktualisiert diese ersten Daten automatisch in der zentralen Datenbank 11. Die auf diese Weise geänderten ersten Daten werden daraufhin über das Netzwerk an die entsprechenden anderen Kommunikationsanlagen 2,3 übermittelt, wodurch die in den lokalen Datenbanken 21,31 der entsprechenden Kommunikationsanlagen 2,3 gespeicherten ersten Daten aktualisiert werden.

Werden Daten in einer lokalen Datenbank 21,31 in einer der Kommunikationsanlagen 2,3 geändert (z.B. ein Eintrag eines Kurzwahlzieles), so muß dieser Eintrag entsprechend auch in der zentralen Datenbank 11 aktualisiert werden. Hierfür ist in den Kommunikationsanlagen 2,3 jeweils eine die entsprechende lokale Datenbank 21,31 auf Änderungen überwachende lokale Synchronisationseinrichtung 22,32 vorgesehen. In Fällen, in denen erste Daten in einer lokalen Datenbank 21,31 geändert werden, übermittelt die lokale Synchronisationseinrichtung 22,32 die geänderten ersten Daten über das Netzwerk an den Server 1. Die geänderten ersten Daten werden durch eine zentrale Aktualisierungseinrichtung 15 empfangen und in die zentrale Datenbank 11 eingetragen.

Des weiteren haben die Kommunikationsanlagen 2, 3 jeweils über eine lokale Zugriffseinrichtung 24, 34 Zugriff auf zweite, in der zentralen Datenbank 11 gespeicherten Daten, die in den jeweiligen lokalen Datenbanken 21, 31 nicht verfügbar sind.

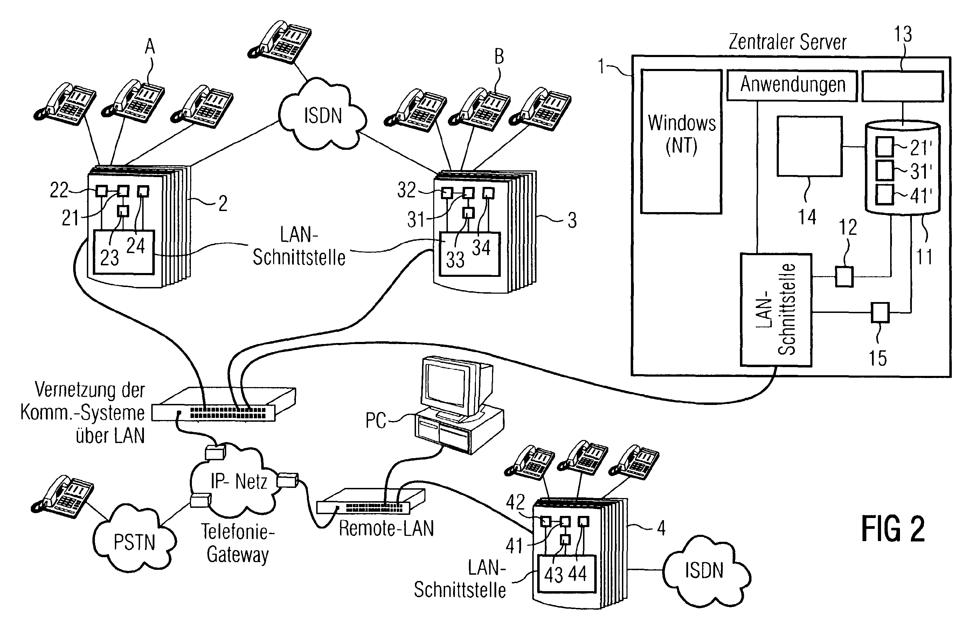

Fig. 2 zeigt beispielhaft eine mögliche Anordnung eines verteilten Kommunikationssystems mit drei Kommunikationsanlagen 2,3,4 und einem zentralen Server 1. An die Kommunikationsanlagen 2,3,4 sind jeweils eine Mehrzahl von Kommunikationsendgeräten - z.B. Telefone - angeschlossen. Die Vernetzung der Kommunikationsanlagen 2,3,4 erfolgt im vorliegenden Ausführungsbeispiel über ein lokales Netzwerk LAN (Local Area Network), bei dem eine Datenübertragung mittels des IP-Protokolls realisiert wird. Alternativ keine eine Vernetzung der Kommunikationsanlagen 2,3,4 mit Hilfe eines Tunnelungsmechanismus auch über leitungsvermittelnde Netze (z.B. ein ISDN-orientiertes Kommunikationsnetz) erfolgen. Die Meldungen eines kommunikationsanlagen-spezifischen Vernetzungsprotokolls werden dabei beispielsweise in entsprechende Meldungen des Übertragungsprotokolls (z.B. IP, ISDN) verpackt und über das Netzwerk versendet.

Die Kommunikationsanlagen 2,3,4 sind in vorliegenden Ausführungsbeispiel über ein Ethernet-LAN miteinander verbunden und können über dieses Ethernet-LAN Signalisierungs- und Sprachdaten austauschen. Die Verbindung der einzelnen Kommunikationsanlagen 2,3,4 zu dem lokalen Netzwerk LAN erfolgt jeweils über eine in den Kommunikationsanlagen 2,3,4 jeweils implementierte LAN-Schnittstelle. Jede Kommunikationsanlage 2,3,4 weist eine lokale Datenbank 21,31,41 zur Speicherung von kommunikationsanlagen-spezifischen ersten Daten auf.

Im zentralen Server 1 ist eine übergreifende zentrale Datenbank 11 integriert, die ein Abbild aller ersten Daten 21',31',41' oder mindestens eines Teils der ersten Daten aller im Kommunikationssystem angeordneten Kommunikationsanlagen 2,3,4 enthält. Zwischen dem Server 1 und den Kommunikationsanlagen 2,3,4 existiert eine Netzwerkverbindung zum bidirektionalen Datenaustausch. Durch eine zentrale Synchronisationseinrichtung 12 des Servers 1 und lokale Synchronisationseinrichtungen 22,32,42 der Kommunikationsanlagen 2,3,4 wird sichergestellt, daß bei einer Änderung von ersten Daten in der zentralen Datenbank 11 oder in einer der lokalen Datenbanken 21,31,41 automatisch die korrespondierenden ersten Daten in den jeweiligen Kommunikationsanlagen 2,3,4 oder im Server 1 aktualisiert werden. Die so zusammengefaßte zentrale Datenbank 11 repräsentiert ein Abbild des gesamten, aus mehreren Kommunikationsanlagen 2,3,4 gebildeten Kommunikationssystems in der Darstellung eines einzigen Systems (Single System Image).

Die zentrale Datenbank 11 kann von einer entsprechend ausgestalteten zentralen Administrierungseinrichtung 13 eingesehen, verändert und/oder konfiguriert werden. Zusätzlich wird mit einer zentralen Prüfeinrichtung 14 des Servers 1 ein Konsistenzcheck realisiert, so daß z.B. keine doppelte Rufnummernvergabe innerhalb des Kommunikationssystems möglich ist. Neben den ersten Daten der einzelnen Kommunikationsanlagen 2,3,4 enthält die zentrale Datenbank 11 auch für das Kommunikationsnetz wichtige Zusatzinformationen - im folgenden als zweite Daten bezeichnet - über die Kommunikationsanlagen 2,3,4, wie beispielsweise die Adresse einer Kommunikationsanlage 2,3,4 im Netzwerk.

Nach außen und aus Sicht der Administration wirkt dieser gegebenenfalls weltweite Systemverbund nun wie eine einzige Anlage und läßt sich auch wie eine solche administrieren. Für übergreifende Vorgänge zwischen den Kommunikationsanlagen 2,3,4 wird ebenfalls auf die zentrale Datenbank 11 zugegriffen. Beispielsweise können bei einem Anruf eines ersten Teilnehmers A an der Kommunikationsanlage 2 zu einem zweiten Teilnehmer B der Kommunikationsanlage 3 durch den Server 1 sämtliche Informationen (zweite Daten), wie z.B. Name und Adresse, zu dem gewünschten zweiten Teilnehmer B bereitgestellt werden. Kennt die Kommunikationsanlage 2 nicht den Aufenthaltsort des gewünschten zweiten Teilnehmers B, so kann dieser über die zentrale Datenbank 11 mittels der lokalen Zugriffseinrichtung 24,34,44 erfragt werden. Auf diese Weise brauchen nicht unbedingt in jeder Kommunikationsanlage 2,3,4 alle Aufenthaltsorte der Teilnehmer des gesamten Kommunikationssystems vorgehalten zu werden. Ebenfalls ist in Fig. 2 die unter Bezug auf Fig. 1 erläuterte zentrale Aktualisierungseinrichtung 15 und die jeweiligen lokalen Aktualisierungseinrichtungen 23,33,43 dargestellt.

Auch für räumlich weit auseinanderliegende Einzelsysteme (z.B. auch in anderen Städten, Ländern), die beispielsweise über ein IP-Netzwerk (Internet) miteinander verbunden sind, kann eine gemeinsame zentrale Administration durchgeführt und genutzt werden.

Der Server 1 kann auch zusätzliche Anwendungen beispielsweise zur Erweiterung der Funktionalität der Kommunikationsanlagen 2,3,4 bereitstellen, wie z.B. Leistungsmerkmale und CTI-Anwendungen (Computer Telephonie Integration). Der Server 1 beinhaltet hierzu ein Betriebssystem, z.B. Windows NT, auf dem die einzelnen Softwarekomponenten aufgesetzt sind.

## Patentansprüche

1. Server (1) für ein aus mehreren, untereinander über ein Netzwerk verbundenen Kommunikationsanlagen (2,3) bestehendes Kommunikationssystem, wobei die Kommunikationsanlagen (2,3) jeweils eine lokale Datenbank (21,31) zur Speicherung von ersten Daten aufweisen,
mit einer zentralen Datenbank (11) zur Speicherung zumindest eines Teils der in den lokalen Datenbanken (21,31) der jeweiligen Kommunikationsanlagen (2,3) gespeicherten ersten Daten, und
mit einer zentralen Synchronisationseinrichtung (12) zur Überwachung der zentralen Datenbank (11) auf Änderungen von die Kommunikationsanlagen (2,3) betreffenden ersten Daten und zur Übermittlung der geänderten ersten Daten an die entsprechende Kommunikationsanlage (2,3) über das Netzwerk.

2. Server (1) gemäß Anspruch 1,
**gekennzeichnet durch**,
eine zentrale Prüfeinrichtung (14)
- zur Überprüfung, ob es sich bei den geänderten ersten Daten um mehrere Kommunikationsanlagen (2,3) betreffende Daten handelt, und
- bei einem positiven Überprüfungsergebnis zur Aktualisierung dieser ersten Daten in den entsprechenden Kommunikationsanlagen (2,3).

3. Server (1) gemäß Anspruch 2,
**dadurch gekennzeichnet,**
**daß** die ersten Daten, den Betrieb von mehreren Kommunikationsanlagen (2,3) betreffende Rufnummernpläne sind.

4. Server (1) gemäß Anspruch 1, 2 oder 3, **gekennzeichnet durch**
eine zentrale Aktualisierungseinrichtung (15)
- zum Empfangen von ersten Daten, die in einer lokalen Datenbank (21,31) einer Kommunikationsanlage (2,3) geändert und über das Netzwerk an den Server (1) übermittelt wurden, und
- zum Aktualisieren dieser ersten Daten in der zentralen Datenbank (11).

5. Server (1) gemäß einem der Ansprüche 1 bis 4,
**dadurch gekennzeichnet,**
**daß** die zentrale Datenbank (11) den jeweiligen Kommunikationsanlagen (2, 3) zweite Daten zur Verfügung stellt.

6. Server (1) gemäß einem der Ansprüche 1 bis 5,
**gekennzeichnet durch**
eine zentrale Administrierungseinrichtung (13) zum zentralen Administrieren der ersten und zweiten Daten in der zentralen Datenbank (11).

7. Server (1) gemäß einem der Ansprüche 1 bis 6,
**dadurch gekennzeichnet,**
**daß** das Netzwerk ein IP-orientiertes (Internet Protocol) Netzwerk ist.

8. Kommunikationsanlage (2) für ein aus mehreren, untereinander über ein Netzwerk verbundenen Kommunikationsanlagen (2,3) bestehendes Kommunikationssystem, wobei die Kommunikationsanlagen (2,3) jeweils eine lokale Datenbank (21,31) zur Speicherung von ersten Daten aufweisen,
**gekennzeichnet durch**
eine lokale Synchronisationseinrichtung (22) zur Überwachung mindestens eines Teils der in der lokalen Datenbank (21) gespeicherten Daten auf Änderungen und zur Übermittlung von geänderten ersten Daten über das Netzwerk an einen im Netzwerk angeordneten Server (1).

9. Kommunikationsanlage (2) gemäß Anspruch 8,
**gekennzeichnet durch**
eine lokale Aktualisierungseinrichtung (23)
- zum Empfangen von ersten, die Kommunikationsanlage (2) betreffenden Daten, die in einer zentralen Datenbank (11) des Servers (1) geändert wurden, und
- zum Aktualisieren dieser Daten in der lokalen Datenbank (21).

10. Kommunikationsanlage (2) gemäß Anspruch 9,
**gekennzeichnet durch**
eine lokale Zugriffseinrichtung (24) zum Zugreifen auf in der zentralen Datenbank (11) gespeicherten zweiten Daten.

11. Verfahren zum Synchronisieren von lokalen, in Kommunikationsanlagen (2,3) angeordneten Datenbanken (21,31) und einer zentralen Datenbank (11) eines Servers (1) in einem Kommunikationssystem, wobei die Kommunikationsanlagen (2,3) und der Server (1) über ein Netzwerk untereinander verbunden sind, bei dem eine Kopie von zumindest einem Teil von ersten, in den lokalen Datenbanken (21,31) der jeweiligen Kommunikationsanlagen (2,3) gespeicherten Daten in der zentralen Datenbank (11) gespeichert wird,
bei dem die zentrale Datenbank (11) auf Änderungen der ersten, eine Kommunikationsanlage (2,3) betreffenden Daten überwacht wird, und in Fällen, in denen eine Änderung der ersten Daten erfolgt ist, die geänderten ersten Daten über das Netzwerk an die entsprechende Kommunikationsanlage (2,3) übermittelt werden, und
bei dem die lokalen Datenbanken (11) auf Änderungen der ersten Daten überwacht werden, und in Fällen, in denen eine Änderung der ersten Daten erfolgt ist, die geänderten ersten Daten über das Netzwerk von der entsprechenden Kommunikationsanlage (2,3) an den Server (1) übermittelt werden.

12. Verfahren gemäß Anspruch 11,
**dadurch gekennzeichnet,**
**daß** erste, in der zentralen Datenbank (11) geänderte Daten an einer Kommunikationsanlage (2,3) empfangen werden, und
**daß** diese ersten Daten in der lokalen Datenbank (21,31) der Kommunikationsanlage (2,3) aktualisiert werden.

13. Verfahren gemäß einem der Anspruch 11 oder 12,
**dadurch gekennzeichnet,**
**daß** erste, in einer lokalen Datenbank (21,31) geänderte Daten am Server (1) empfangen werden, und
**daß** diese ersten Daten in der zentralen Datenbank (11) des Servers (1) aktualisiert werden.

14. Verfahren gemäß einem der Ansprüche 11 bis 13,
**dadurch gekennzeichnet,**
**daß** die geänderten ersten Daten daraufhin geprüft werden, ob die geänderten ersten Daten mehrere Kommunikationsanlagen (2,3) betreffen, und
**daß** die ersten Daten bei einem positiven Überprüfungsergebnis in den entsprechenden Kommunikationsanlagen (2,3) aktualisiert werden.

15. Verfahren gemäß Anspruch 14,
**dadurch gekennzeichnet,**
**daß** die ersten, mehrere Kommunikationsanlagen (2,3) betreffende Daten, Rufnummernpläne sind.

16. Verfahren gemäß einem der Ansprüche 11 bis 15,
**dadurch gekennzeichnet,**
**daß** durch die zentrale Datenbank (11) den Kommunikationsanlagen (2,3) zweite Daten zur Verfügung gestellt werden.

17. Verfahren gemäß Anspruch 16,
**dadurch gekennzeichnet**,
die Kommunikationsanlagen (2,3) auf die in der zentralen Datenbank (11) gespeicherten zweiten Daten zugreifen.
